# EUROPÄISCHE PATENTSCHRIFT

(11) **EP 0 354 593 B1**
(45) Veröffentlichungstag und Bekanntmachung des Hinweises auf die Patenterteilung: **03.03.1993**
(21) Anmeldenummer: 89116621.7
(22) Anmeldetag: 19.01.1987
(51) Int. Cl.: A01N 43/90

(54) **Schädlingsbekämpfungsmittel**
Pesticide
Pesticide

(30) Priorität: 25.01.1986 DE 3602276; 17.09.1986 DE 3631559
(43) Veröffentlichungstag der Anmeldung: 14.02.1990
(62) Teilanmeldung aus: 87100638.3
(73) Patentinhaber: HOECHST AKTIENGESELLSCHAFT, 65926 Frankfurt am Main (DE)
(72) Erfinder: Knauf, Werner, Dr., D-6239 Eppstein/Taunus (DE); Waltersdorfer, Anna, Dr., D-6000 Frankfurt am Main (DE); Sagenmüller, Alfons, Dr., D-6092 Kelsterbach (DE); Stier, Hubert, D-6093 Flörsheim am Main (DE); Lourens, Jan, Dr., Dasmarinas Village Makiti Metro-Manila (PH)

(56) Entgegenhaltungen:
- CENTRAL PATENTS INDEX / BASIC ABSTRACTS JOURNAL, Sektion C, Woche 8609, 23. April 1986, Nr. 061934, Derwent Publications Ltd, London, GB; & ZA-A-84 02 565 (MERCK & CO. INC.) 07-10-1985
- CENTRAL PATENTS INDEX / BASIC ABSTRACTS JOURNAL, Sektion C, Woche 8609, 23. April 1986, Nr. 061935, Derwent Publications Ltd, London, GB; & ZA-A-84 02 567 (MERCK & CO. INC.) 07-10-1985

## Beschreibung

Aus der Gruppe der mikrobiellen Metabolite sind einige Verbindungen bekannt, die insektizide und akarizide Wirkung besitzen. Zu diesen gehören Verbindungen aus der Klasse der Avermectine und deren Derivate. Bei diesen Verbindungen handelt es sich um ein Stoffgemisch von macrocyclischen Lactonen der Formel I, 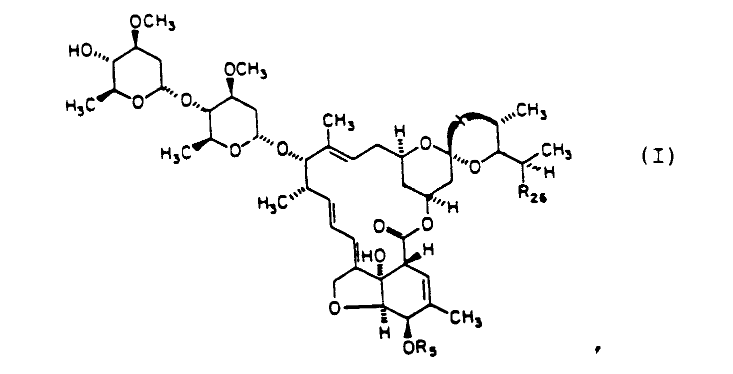
wobei die Substituenten folgende Bedeutungen besitzen können:
R₅ = H oder CH₃
R₂₆ = CH₃ oder C₂H₅ und
X= -CH=CH-, 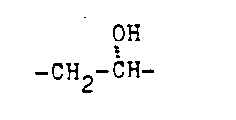
oder -CH₂-CH₂-.
Diese werden aus dem Mikroorganismus Streptomyces avermitilis isoliert, s. Fisher, M.H.: The Avermectins in Recent Advances in the Chemistry of Insect Control edited by N.F. Janes; 1985; es handelt sich im wesentlichen um acht Komponenten, Komponenten A₁ₐ, A_{1b}, A₂ₐ, A_{2b}, B₁ₐ, B_{1b}, B₂ₐ, B_{2b}, s. I. Putter et al. Experientia 37 (1981) S. 963, Birkhäuser Verlag (Schweiz). Daneben besitzen auch synthetische Derivate, insbesondere Dihydroderivate (X= -CH₂-CH₂)), Interesse z.B. das Produkt Ivermectin, s. Dybas, Green, British Crop. Protection Conference, Pests and Diseases, S. 947, 951 (1984).

In den südafrikanischen Patentanmeldungen Nr. 842 565 und Nr. 842 567 sind ferner Kombinationen von Avermectinen mit bestimmten Insektiziden beschrieben.

Es wurden nun neue Kombinationen von Avermectinen und Derivaten der Formel I mit dem Wirkstoff Endosulfan gefunden, bei denen überraschenderweise synergistische Wirkungen auftreten.

Gegenstand der Erfindung sind daher Schädlingsbekämpfungsmittel, die mindestens eine Verbindung der Formel I in Kombination mit Endosulfan enthalten.

Die Avermectine der Formel I werden in der Regel als Gemische eingesetzt. Von besonderem Interesse ist hierbei das Product Abamectin, das im wesentlichen die Avermectine B₁ enthält, s. K. E. Nowels, Agrichem. Age., Januar 1985, S. 28.

Der Wirkstoff Endosulfan (common name) ist in CH. R. Worthing, S. B. Walker, The Pesticide Manual, 7th ed. British Crop. Protection Council (1983) beschrieben.

Die insektizide und akarizide Wirksamkeit der erfindungsgemäßen Wirkstoffkombinationen liegt deutlich höher als von den Wirkungen der Einzelkomponenten zu erwarten war. Durch Anwendung dieser Kombinationen können daher die Aufwandmengen der Einzelkomponenten reduziert werden. Ihre Anwendung bringt demzufolge ökonomische wie auch ökologische Vorteile.

Die erfindungsgemäßen Mittel eignen sich bei guter Pflanzenverträglichkeit und günstiger Warmblütertoxizität zur Bekämpfung von tierischen Schädlingen, insbesondere Insekten, Spinnentieren und Nematoden, besonders bevorzugt zur Bekämpfung von Insekten, sowie deren Entwicklungsstadien, die in der Landwirdschaft, in Forsten, im Vorrats- und Materialschutz sowie aus dem Hygienesektor vorkommen. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spp.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blatella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp.,
Aus der Ordnung der Anoplura z.B. Phylloera vastatrix, Pemphigus spp., Pediculus humanus corporis, Haematopinus spp., Linognathus spp.
Aus der Ordnung der Mallophage z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadratum, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelus bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp, Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa. Aus der Ordnung der Siphonaptera z.B. Xenopsylla cheopis, Ceratophyllus spp.
Aus der Ordnung der Arachnida z.B. Scorpio maurus, Latrodectus mactans.

Auch können verschiedene Spinnmilbenarten, wie die Obstbaumspinnmilbe (Panonychus ulmi), die Citrusspinnmilbe (Panonychus citri) und die Bohnenspinnmilbe (Tetranychus urticae), darunter auch Phosphorsäureester-resistente Stämme, gut bekämpft werden.

Die erfindungsgemäßen Mittel enthalten die Wirkstoffe der Formel I, im allgemeinen zu 1 - 95 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxyethylierte Fettalkohole, Alkyl- der Alkylphenol-sulfonate und Dispergiermittel, z.B. ligninsulfonsaures Natrium, 2,2′-dinaphthylmethan-6,6′-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise - gewünschtenfalls in Mischung mit Düngemitteln - hergestellt werden.

Das Gewichtsverhältnis der Verbindung der Formel I zum Kombinationspartner variiert in den erfindungsgemäßen Mitteln im Bereich zwischen 20:1 bis 1:150, ebenso können die Anwendungskonzentrationen der Kombinationen in weiten Grenzen variieren und zwar zwischen 0,001 und 1,5 kg Wirkstoff/ha.

Das nachfolgende Beispiel dient zur Erläuterung der Erfindung.

### Biologisches Beispiel

Es wurden Tankmischungen der Wirkstoffe in geeigneten Formulierungen ausgebracht.

### Beispiel

- Prüfobjekt:: Trialeurodes vaporariorum (Eier)
- Versuchspflanze:: Phaseolus vulgaris
- Art der Behandlung:: Spritzen bis zum beginnenden Abtropfen

| Verbindung | Wirkstoffkonz. (ppm) | % Mortalität nach 14 d |
|---|---|---|
| Abamectin (Ia) | 3,9 | 70 |
| | 2,0 | 60 |
| Endosulfan | 125 | 0 |
| | 63 | 0 |
| Ia + Endosulfan (1 : 32) | 3,9 + 125 | 100 |
| | 2,0 + 63 | 90 |

## Patentansprüche (Patentansprüche für folgende(n) Vertragsstaat(en): AT, BE, CH, DE, FR, GB, GR, IT, LI, LU, NL, SE)

1. Schädlingsbekämpfungsmittel, gekennzeichnet durch einen Gehalt an mindestens einer Verbindung der Formel I 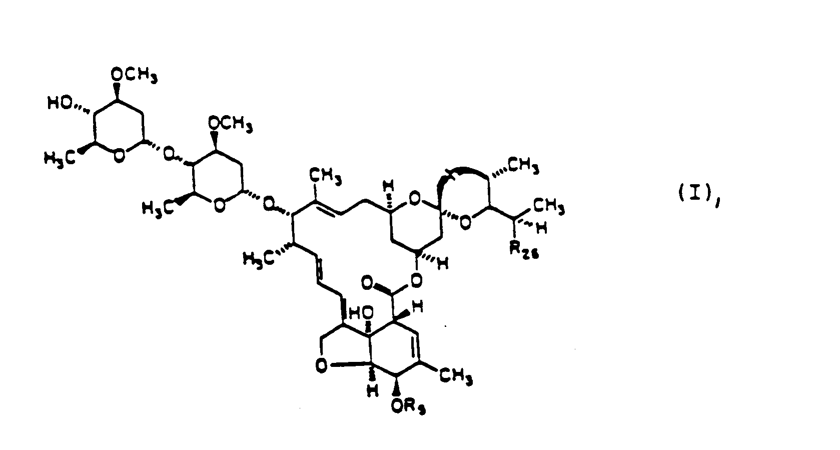 worin
R₅ = H oder CH₃
R₂₆ = CH₃ oder C₂H₅ und
X = -CH=CH-, 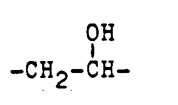 oder -CH₂-CH₂- bedeuten, in Kombination mit dem Wirkstoff Endosulfan.

2. Mittel gemäß Anspruch 1, dadurch gekennzeichnet, daß es als Verbindung der Formel I das Produkt Abamectin enthält.

3. Mittel gemäß Anspruch 1 oder 2, dadurch gekennzeichnet, daß die Komponenten in einem synergistisch wirkenden Verhältnis kombiniert werden.

4. Mittel gemäß Anspruch 1 oder 2, dadurch gekennzeichnet, daß das Gewichtsverhältnis der Kombinationspartner zwischen 20:1 und 1:150 variiert.

5. Verfahren zur Bekämpfung von tierischen Schädlingen, dadurch gekennzeichnet, daß man diese oder ihren Lebensraum mit einer wirksamen Menge eines Mittels gemäß Ansprüchen 1 bis 4 behandelt.

## Patentansprüche (Patentansprüche für folgende(n) Vertragsstaat(en): ES)

1. Verfahren zur Bekämpfung von tierischen Schädlingen, dadurch gekennzeichnet, daß man diese oder ihren Lebensraum mit einer wirksamen Menge eines Mittels, das mindestens eine Verbindung der Formel I 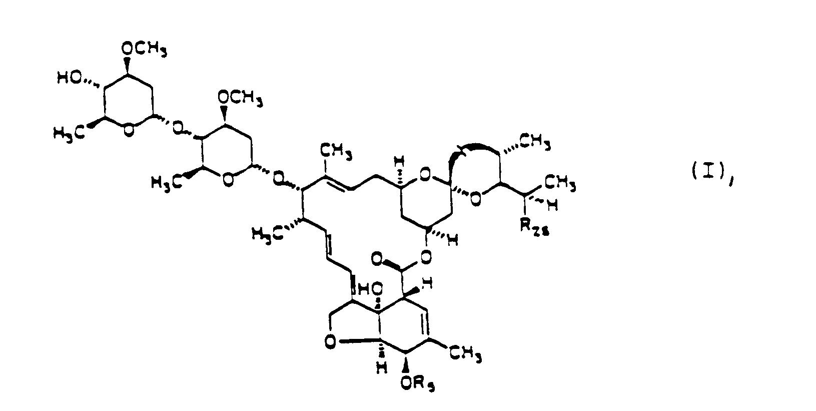 worin
R₅ = H oder CH₃
R₂₆ = CH₃ oder C₂H₅ und
X = -CH=CH-, 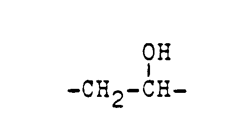 oder -CH₂-CH₂- bedeuten, in Kombination mit dem Wirkstoff Endosulfan enthält, behandelt.

2. Verfahren gemäß Anspruch 1, dadurch gekennzeichnet, daß das Mittel als Verbindung der Formel I das Produkt Abamectin enthält.

3. Verfahren gemäß Anspruch 1 oder 2, dadurch gekennzeichnet, daß die Kombinationspartner in einem synergistisch wirkenden Verhältnis miteinander kombiniert sind.

4. Verfahren gemäß Anspruch 1 oder 2, dadurch gekennzeichnet, daß das Gewichtsverhältnis der Kombinationspartner zwischen 20:1 und 1:150 variiert.

## Claims (Claims for the following Contracting State(s): AT, BE, CH, DE, FR, GB, GR, IT, LI, LU, NL, SE)

1. A pesticide which contains at least one compound of the formula I 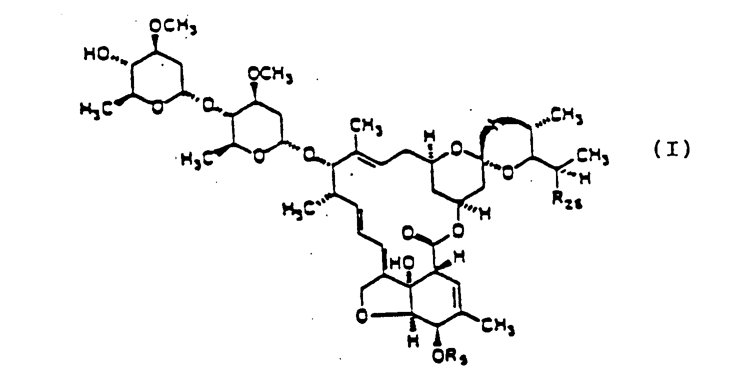 in which
R₅ denotes H or CH₃,
R₂₆ denotes CH₃ or C₂H₅ and
X denotes -CH=CH-, 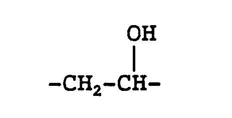 or -CH₂-CH₂-, in combination with the active compound endosulfan.

2. A pesticide as claimed in claim 1, which contains the product abamectin as the compound of the formula I.

3. A pesticide as claimed in claim 1 or 2, wherein the components are combined in a synergistically active ratio.

4. A pesticide as claimed in claim 1 or 2, in which the weight ratio of the combination partners varies between 20:1 and 1:150.

5. A method of combating animal pests, which comprises treating these or their environment with an effective amount of a pesticide as claimed in claims 1 to 4.

## Claims (Claims for the following Contracting State(s): ES)

1. A method of combating animal pests, which comprises treating them or their environment with an effective amount of an agent which contains at least one compound of the formula I 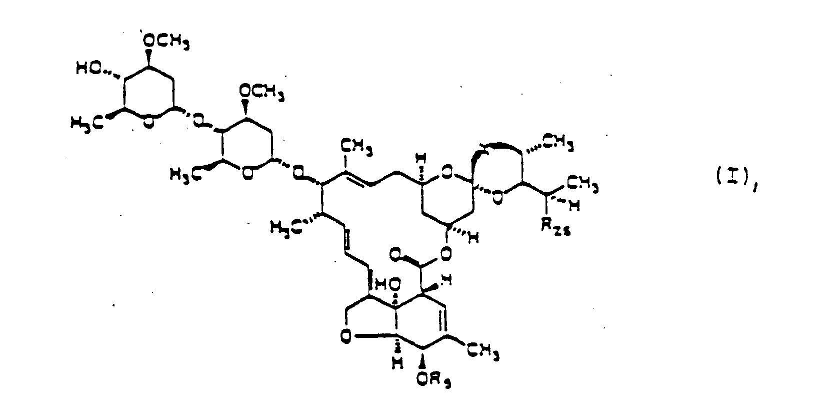 in which
R₅ denotes H or CH₃,
R₂₆ denotes CH₃ or C₂H₅ and
X denotes -CH=CH-, 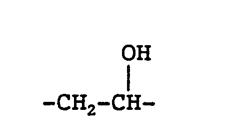 or -CH₂-CH₂-, in combination with the active compound endosulfan.

2. The method as claimed in claim 1, wherein the pesticide contains the product abamectin as the compound of the formula I.

3. The method as claimed in claim 1 or 2, wherein the combination partners are combined with one another in a synergistically active ratio.

4. The method as claimed in claim 1 or 2, wherein the weight ratio of the combination partners varies between 20:1 and 1:150.

## Revendications (Revendications pour l'(les) Etat(s) contractant(s) suivant(s): AT, BE, CH, DE, FR, GB, GR, IT, LI, LU, NL, SE)

1. Produit antiparasitaire (pesticide) caractérisé en ce qu'il comprend un ou plusieurs composés de formule I ci-dessous : 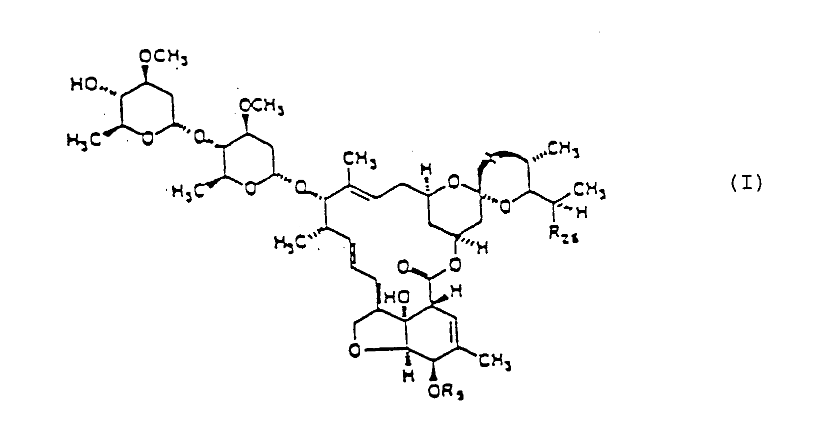 dans laquelle
R₅ = H ou CH₃
R₂₆ = CH₃ ou C₂H₅ et
X = -CH=CH-, 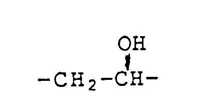 ou -CH₂-CH₂-, associés avec de l'endosulfan.

2. Produit selon la revendication 1, caractérisé en ce qu'il contient une abamectine comme composé de formule I.

3. Produit selon la revendication 1 ou 2, caractérisé en ce que ses composants sont associés dans des proportions donnant un effet de synergie.

4. Produit selon la revendication 1 ou 2, caractérisé en ce que le rapport pondéral des matières actives associées est compris entre 20:1 et 1:150.

5. Procédé de lutte contre des organismes animaux nuisibles, caractérisé en ce qu'on les traite, ou leur environnement, avec une quantité appropriée d'un produit selon les revendications 1 à 4.

## Revendications (Revendications pour l'(les) Etat(s) contractant(s) suivant(s): ES)

1. Procédé de lutte contre des organismes animaux nuisibles, procédé caractérisé en ce qu'on les traite, ou leur environnement, avec une quantité appropriée d'un produit comprenant un ou plusieurs composés de formule I ci-dessous : 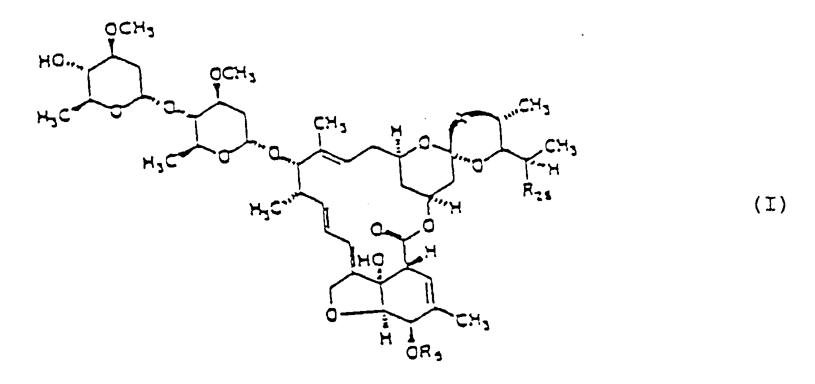 dans laquelle
R₅ = H ou CH₃
R₂₆ = CH₃ ou C₂H₅ et
X = -CH=CH-, 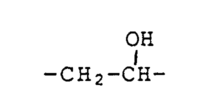 ou -CH₂-CH₂-, associés avec de l'endosulfan.

2. Procédé selon la revendication 1, caractérisé en ce que le produit contient une abamectine comme composé de formule I.

3. Procédé selon la revendication 1 ou 2, caractérisé en ce que ses composants sont associés dans des proportions donnant un effet de synergie.

4. Procédé selon la revendication 1 ou 2, caractérisé en ce que le rapport pondéral des matières actives associées est compris entre 20:1 et 1:150.
